# EUROPEAN PATENT APPLICATION

(11) **EP 2 444 624 A1**
(43) Date of publication of application: **25.04.2012**
(21) Application number: 12151799.9
(22) Date of filing: 04.12.2009
(51) Int. Cl.: F02B 37/12, F02B 39/16, F01D 21/00, F16D 63/00, H02K 49/04, B60L 7/28, F02C 6/12

(54) **Turbocharger brake**

(62) Divisional of application: 09252727.4
(71) Applicant: Perkins Engines Company Limited, Peterborough, Cambridgeshire PE1 5NA (GB)
(72) Inventor: Costall, Aaron William, Peterborough, PE2 9AW (GB)
(74) Representative: Frost, Alex John

(57) **Abstract**

Exhaust gases can bypass a turbocharger (10) to reduce its speed, but energy in the gases is then lost. A brake for a turbocharger can be implemented using at least one rotor (30) driven by the turbocharger rotatable shaft (15) and at least one stator (40). Either the rotor or stator are magnetic, the other being ferrous, such that rotation of the shaft induces eddy currents in the ferrous part, thereby extracting energy from the shaft. The magnetic field experienced by the ferrous part can be adjusted in response to an input parameter to control the level of braking.

## Description

### Technical Field

The disclosure relates to turbochargers and a method of operating a turbocharger, particularly, an Electric Turbo Assist turbocharger. An engine comprising such a turbocharger is also disclosed.

### Background

A turbocharger forms part of an engine, and comprises a turbocharger shaft that rotates in response to exhaust gases from the engine. The principal purpose of the turbocharger is to compress gases with a compressor for introduction into the engine cylinders (called "boost").

An Electric Turbo Assist (ETA) turbocharger shaft also generates electrical energy through rotation of the shaft. The generated energy can be stored in batteries, used in auxiliary electrical systems or fed to a motor connected to the engine crankshaft to improve engine response. The ETA system provides an additional mechanism to recover energy that might otherwise be lost where the energy in the exhaust gases exceeds what is needed to drive the compressor.

In some circumstances, the electric machine associated with the turbocharger may also act as a motor instead of a generator. Also, the electric machine associated with the engine crankshaft can likewise operate as a generator. Where the turbine cannot provide sufficient mechanical power to drive the compressor to meet the needs of the engine, the crankshaft can drive its associated electric device as a generator. Power from the generator will drive the electric machine on the turbocharger shaft as a motor, thus providing additional energy to the drive the compressor and increase the compressed air flowing to the engine.

U.S. Pat. No. 5,678,407 describes an example of one turbocompounding ETA system. U.S. Pat. No. 7,174,714 describes a control system that can maximize gains in efficiency for a turbocompounding ETA system.

A difficulty for turbochargers arises when the engine reduces its boost requirements or when the turbocharger speed or temperature exceeds safety limits. Existing systems cause the exhaust gases to bypass the turbocharger turbine to effect braking, particularly when intake boost requirements quickly decrease. When such a wastegate is used, the energy in the exhaust gases is completely lost.

In ETA systems, the electrical machine may act in generating mode to absorb excess turbocharger shaft power, thereby acting as a brake. However, this system is limited in the degree to which it can brake the turbocharger shaft. Moreover, if this brake fails, existing systems can only use a wastegate, thereby losing the exhaust gas energy. The disclosure is directed to overcome one or more of the limitations discussed above.

### Summary of the Disclosure

A turbocharger for providing boost to an engine, comprises: a rotatable shaft; a turbine, configured to receive exhaust gases from the engine, to drive the rotatable shaft thereby; a compressor mounted to be driven by the rotatable shaft; the one or more braking rotors arranged to be driven by the rotatable shaft; one or more braking stators, the one or more braking rotors being magnetic and the one or more braking stators being positioned relative to the one or more braking rotors, such that rotation of the rotatable shaft induces eddy currents in the one or more braking stators to extract energy from the rotatable shaft thereby; and a controller, arranged to receive an input parameter and, based on said input parameter, to adjust the magnetic field strength at the one or more braking rotors to vary the level of generation of eddy currents and control braking of the rotatable shaft thereby.

A method of operating such a turbocharger comprises: rotating the rotatable shaft during operation of the turbocharger to generate boost, thereby driving rotation of the one or more braking rotors relative to the braking stator; receiving an input parameter of the turbocharger; and adjusting the magnetic field strength at the one or more braking rotors based on said input parameter, to control the level of generation of eddy currents in the one or more braking rotors and thereby control the rate of energy extraction from the rotatable shaft and braking of the rotatable shaft.

### Clauses

1. A turbocharger for providing boost to an engine, comprising:
a rotatable shaft;
one or more permanent magnet braking rotors arranged to be driven by the rotatable shaft;
one or more braking stators positioned relative to the one or more braking rotors, such that rotation of the rotatable shaft induces eddy currents in the one or more braking stators to extract energy from the rotatable shaft thereby; and
a controller, arranged to receive an input parameter, and in response to said input parameter, to adjust a distance between the one or more braking rotors and the one or more braking stators to vary the level of generation of eddy currents and control braking of the rotatable shaft thereby.

2. A turbocharger for providing boost to an engine, comprising:
a rotatable shaft;
one or more braking rotors arranged to be driven by the rotatable shaft;
one or more magnetic braking stators positioned relative to the one or more braking rotors, such that rotation of the rotatable shaft induces eddy currents in the one or more braking rotors to extract energy from the rotatable shaft thereby; and
a controller, arranged to receive an input parameter, and in response to said input parameter, to adjust the magnetic field strength at the one or more braking rotors to vary the level of generation of eddy currents and control braking of the rotatable shaft thereby.

3. The turbocharger of clause 2, wherein the one or more magnetic braking stators comprise a permanent magnet.

4. The turbocharger of clause 2, wherein the one or more magnetic braking stators comprise an electromagnet arranged to receive a current.

5. The turbocharger of clause 4, wherein the controller is arranged to adjust the magnetic field strength at the one or more braking rotors by adjusting the current received by the electromagnet.

6. The turbocharger of any one of clauses 2 to 5, wherein the controller is arranged to adjust the magnetic field strength at the one or more braking rotors by adjusting a distance between the one or more braking rotors and the one or more braking stators.

7. The turbocharger of clause 1 or clause 6, wherein in response to the input parameter indicating a reduction in the required boost level, the controller is arranged to reduce the distance between the one or more braking rotors and the one or more braking stators.

8. The turbocharger of any one of clause 1, 6 or 7, wherein the controller further comprises a braking actuator, arranged to move the one or more braking stators relative to the rotatable shaft, to adjust the distance between the one or more braking rotors and the one or more braking stators thereby.

9. The turbocharger of clause 8, wherein the braking actuator comprises a stepper motor.

10. The turbocharger of any preceding clause, wherein the input parameter is representative of at least one of: a required boost level; an engine temperature; an engine speed; and a turbocharger temperature.

11. The turbocharger of any preceding clause, further comprising an electrical generator arrangement, comprising:
one or more permanent magnet generator rotors arranged to be driven by the rotatable shaft; and
a generator stator, positioned relative to the one or more generator rotors such that rotation of the rotatable shaft induces a generation current in the generator stator.

12. The turbocharger of clause 11, when dependent upon clause 1, wherein at least one of the generator rotors is also a braking rotor.

13. A turbo-compound engine system comprising the turbocharger of any preceding clause.

14. A method of operating a turbocharger, the turbocharger comprising a rotatable shaft and a braking arrangement comprising one or more permanent magnet braking rotors and one or more braking stators, the method comprising:
rotating the rotatable shaft during operation of the turbocharger to generate boost, thereby driving rotation of the one or more braking rotors relative to the braking stator;
receiving an input parameter of the turbocharger; and
adjusting a distance between the one or more braking rotors and the one or more braking stators in response to said input parameter, to control the level of generation of eddy currents in the one or more braking stators and thereby control the rate of energy extraction from the rotatable shaft and braking of the rotatable shaft.

15. A method of operating a turbocharger, the turbocharger comprising a rotatable shaft and a braking arrangement comprising one or more braking rotors and one or more magnetic braking stators, the method comprising:
rotating the rotatable shaft during operation of the turbocharger to generate boost, thereby driving rotation of the one or more braking rotors relative to the braking stator;
receiving an input parameter of the turbocharger; and
adjusting the magnetic field strength at the one or more braking rotors in response to said input parameter, to control the level of generation of eddy currents in the one or more braking rotors and thereby control the rate of energy extraction from the rotatable shaft and braking of the rotatable shaft.

### Brief Description of the Drawings

The turbocharger and method of operating a turbocharger may be put into practice in various ways, one of which will now be described by way of example only and with reference to the accompanying drawing in which:

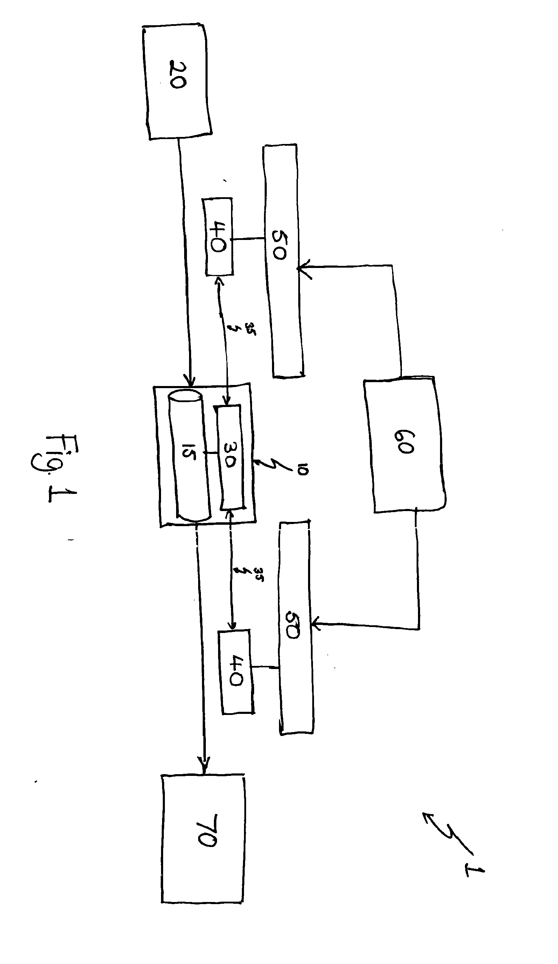

Figure 1 shows a diagrammatic view of a turbocharger system with an eddy current brake.

### Detailed Description

Referring to Figure 1, a schematic diagram illustrating a turbocharger system 1 is shown. The turbocharger system 1 is associated with an engine (not shown). The turbocharger system 1 may comprise: a turbocharger device 10; an input for receiving exhaust gases from the engine 20; and an electrical machine 70.

The turbocharger device 10 may comprise: a turbocharger shaft 15; and a braking rotor 30. The turbocharger system 1 may further comprise: at least one braking stator 40; at least one braking actuator 50; and a controller 60. In the embodiment shown in Figure 1, two braking stators 40 are shown, each with a respective braking actuator 50.

The turbocharger device 10 may further comprise a turbine and compressor (not shown). As is well known, exhaust gas from the engine will pass through an exhaust manifold through input 20 and across the turbine of the turbocharger 10 in exiting the engine. The turbine is driven by the exhaust gases and turns the turbocharger shaft 15 on which the compressor is mounted. The compressor is driven by the shaft 15 and compresses intake air delivered to the engine.

The turbocharger system 1 may form part of a turbocompounding or TC system in the engine. The turbocharger system 1 may further have an electrical machine 70, which is preferably capable of operating in a mode to generate electrical power (that is, as a generator or an alternator) or in a mode to consume electrical power and convert it to rotational (mechanical) power (that is, as a motor). The electrical machine 70 is preferably incorporated with the turbocharger shaft 15. This may be accomplished by having the generator rotor (not shown) as part of the shaft 15, with the stator (not shown) in a fixed position about the shaft 24.

One mode of operation for the TC system is when the electrical machine 70 is operating as a generator. In one embodiment, a second electric machine (not shown) may operate as a motor, drawing power and assisting the engine by putting mechanical power into its crankshaft. Additionally or alternatively, electrical power may be put into an electrical storage (not shown) or used to power electrical loads (not shown). In an alternative mode of operation, the electrical machine 70 may be operated as a motor. It can thereby assist the turbocharger 10 by putting mechanical power into its shaft.

The braking system will now be described. In normal operation, the electrical machine 70 may act in a generating mode to absorb excess turbo shaft power, thereby acting as a brake. In this arrangement, an additional braking mechanism may be provided as a secondary or fail-safe safety feature, in case the electrical generator of the electrical machine 70 is unable to extract enough energy to brake the turbocharger shaft sufficiently.

The principle of the braking system is that either the one or more braking stators 40 or one or more braking rotors 30 are magnetic, the other being ferrous. By inducing eddy currents in the ferrous part, being either the braking stators 40 or braking rotors 30, rotation of the turbocharger shaft is resisted and energy is extracted thereby. This can be controlled to provide a braking effect. Consequently, a wastegate need not be used.

An eddy current dynamometer is known for use in turbocharger turbine testing, for example, "The development of a dynamometer for torque measurement of automotive turbocharger turbines" in Proceedings of the Institution of Mechanical Engineers, Part D: Journal of Automobile Engineering, vol. 221, no. 2/2007. As will now be described, an adaptation of this dynamometer technology can be used to implement a turbocharger braking system.

The braking rotor 30 is driven by the turbocharger shaft 15. Preferably, the braking rotor 30 comprises at least one permanent magnet. In an exemplary embodiment, the braking rotor 30 is a 14-pole magnet (14 x dia. 12mm x 12mm depth NdFeB button magnets, and 14 x dia. 8mm x 12mm depth NdFeB button magnets, arranged in two radial rows) encased in an aluminium disk of diameter approximately 80mm, canned by a carbon fibre composite ring, pre-compressed to contain the magnets at high rotational speeds.

The braking rotor 30 is driven by the turbocharger shaft 15 to rotate at the same speed. Braking stators 40 are positioned axially in front and behind the braking rotor 30. The braking stators 40 may nominally align with the rotating area of the braking rotor 30 magnetic material. Thus, it may be about 80mm diameter, of the order of 1 to 2mm thick, and the material may be EN2 steel coated with Nickel-Phosphorous to limit oxidization. The specific sizes may allow for power absorption of up to about 60kW.

The rotation causes eddy currents to be induced in the braking stators 40. Energy is thereby extracted from the turbocharger shaft 35 due to this eddy current generation. This exerts a braking force on the turbocharger 10. The eddy current generation is relatively shallow, so it may be desirable to maintain the parallel orientation of the braking rotor 30 and braking stators 40 to provide that eddy current generation, and therefore heating, is evenly distributed on the surface of the stator.

The distance 35 between the braking stators 40 and the braking rotor 30 controls the rate of energy extraction. Actuators 50 control the location of the braking stators 40 and may therefore adjust this distance 35. Actuators 50 preferably comprise stepper motor actuated screws, although other forms of motor or actuator may be contemplated by the skilled person.

A minimum stator-rotor clearance may be in the order of approximately 0.5mm to be used for maximum power absorption; in other words, fully engaged braking. In the disengaged state, a stator-rotor clearance of more than about 12mm and preferably more may be used to minimize the power lost.

A controller 60 receives an input signal (not shown), indicative of an engine parameter. Preferably, the engine parameter represents the desired boost level. Additionally or alternatively, the engine parameter may indicate one or more of: engine speed; engine temperature; indications of the overheating of bearings or the electrical machine. These may assist in preventing permanent damage to the Electric Turbo Assist machine. The controller 60 may be electronic, but alternatively might be electromechanical or implemented in software or firmware.

In the engine operating situation, when the required boost level drops significantly, the controller 60 activates the stepper motors of the actuators 50 to reduce the distance 35. Torque is thereby extracted from the turbocharger shaft 15, slowing it down and reducing the compressor boost.

Potentially, the braking stators 40 may be significantly heated. Thus, they may be positioned appropriately near a cooler compressor (not shown) of the turbocharger, to limit heat soak from the turbine. Additionally, air from the compressor side of the turbocharger may be used to cool the braking stators 40.

It is also desirable to isolate the braking stators 40 from the electrical machine 70. Where the electrical machine 70 is being used as an electrical generator, the braking stators 40 may only be used if the electrical machine 70 fails. If the electrical machine 70 does not comprise any permanent magnets, then the braking stators 40 should operate as desired.

The turbocharger system 1 described above can be used within an engine, such as a turbocompounding engine. The engine can be used for a variety of industrial applications, such as vehicles and aircraft.

Although an embodiment of the disclosure has been described above, the skilled person will contemplate various modifications. For example, the skilled person will recognise that various features of the turbocharger system 1 are optional, such as electrical machine 70 or the use of multiple braking stators 40. Moreover, multiple braking rotors 30 might be used. The actuator 50 could take alternative forms, such as different types of motor or magnetic control.

If the electrical machine 70 comprises a permanent magnet rotor, this may alternatively be used as the braking rotor 30. The brake may then be engaged by moving the ferrous braking stators 40 stators close to the rotor, in particular in an emergency shutdown scenario. The braking stators 40 might take an annular form in such an approach.

A further alternative is to use at least one magnetic braking stator 40 and a ferrous braking rotor 30. In such an embodiment, an eddy current is induced in the braking rotor 30. If compressor air bleed cooling is used to cool the braking stators 40, then at least magnetic braking stator 40 would have benefits, for instance, a ferrous braking rotor 30 would have much less inertia than a magnetic one, so transient operation of the electrical machine 70 acting as a generator would not be penalised as much by the additional parts.

In this embodiment, the at least one magnetic braking stator 40 may optionally comprise an electromagnet. Then, the generation of eddy currents may be adjusted by controlling the current supplied to the electromagnet. This would then adjust the magnetic field strength experienced by the braking rotor 30. This approach might be used instead of a distance adjustment or in addition to a distance adjustment to further increase or decrease the braking force as desirable.

## Claims

1. A turbocharger (10) for providing boost to an engine, comprising:
a rotatable shaft (15);
a turbine, configured to receive exhaust gases from the engine, to drive the rotatable shaft thereby;
a compressor mounted to be driven by the rotatable shaft;
one or more permanent magnet braking rotors (30) arranged to be driven by the rotatable shaft;
one or more braking stators (40) positioned relative to the one or more braking rotors, such that rotation of the rotatable shaft induces eddy currents in the one or more braking stators to extract energy from the rotatable shaft thereby; and
a controller (60), arranged to receive an input parameter, and in response to said input parameter, to adjust a distance between the one or more braking rotors and the one or more braking stators to vary the level of generation of eddy currents and control braking of the rotatable shaft thereby.

2. The turbocharger of claim 1, wherein in response to the input parameter indicating a reduction in the required boost level, the controller is arranged to reduce the distance between the one or more braking rotors and the one or more braking stators.

3. The turbocharger of claim 1 or 2, wherein the controller further comprises a braking actuator (50), arranged to move the one or more braking stators relative to the rotatable shaft, to adjust the distance between the one or more braking rotors and the one or more braking stators thereby.

4. The turbocharger of claim 3, wherein the braking actuator comprises a stepper motor.

5. The turbocharger of any preceding claim, wherein the input parameter is representative of at least one of: a required boost level; an engine temperature; an engine speed; and a turbocharger temperature.

6. The turbocharger of any preceding claim, further comprising an electrical generator arrangement, comprising:
one or more permanent magnet generator rotors arranged to be driven by the rotatable shaft; and
a generator stator, positioned relative to the one or more generator rotors such that rotation of the rotatable shaft induces a generation current in the generator stator.

7. The turbocharger of claim 6, wherein at least one of the generator rotors is also a braking rotor.

8. A turbo-compound engine system (1) comprising the turbocharger of any preceding clause.

9. A method of operating a turbocharger (10), the turbocharger comprising a rotatable shaft (15), a turbine configured to receive exhaust gases from the engine to drive the rotatable shaft thereby, a compressor arranged to be driven by the rotatable shaft and a braking arrangement comprising one or more permanent magnet braking rotors (30) and one or more braking stators (40), the method comprising:
rotating the rotatable shaft during operation of the turbocharger to generate boost, thereby driving rotation of the one or more braking rotors relative to the braking stator;
receiving an input parameter of the turbocharger; and
adjusting a distance between the one or more braking rotors and the one or more braking stators in response to said input parameter, to control the level of generation of eddy currents in the one or more braking stators and thereby control the rate of energy extraction from the rotatable shaft and braking of the rotatable shaft.
